# EUROPÄISCHE PATENTSCHRIFT

(11) **EP 2 221 497 B1**
(45) Veröffentlichungstag und Bekanntmachung des Hinweises auf die Patenterteilung: **10.07.2013**
(21) Anmeldenummer: 10153056.6
(22) Anmeldetag: 09.02.2010
(51) Int. Cl.: F16D 48/06

(54) **Kupplungssteuerverfahren**
Clutch control method
Procédé pour la commande d'embrayage

(30) Priorität: 23.02.2009 DE 102009009999
(43) Veröffentlichungstag der Anmeldung: 25.08.2010
(73) Patentinhaber: GETRAG Getriebe- und Zahnradfabrik Hermann Hagenmeyer GmbH & Cie KG, 74199 Untergruppenbach (DE)
(72) Erfinder: Ottinger, Oliver, 78112 St. Georgen (DE)
(74) Vertreter: Witte, Weller & Partner

(56) Entgegenhaltungen:
- WO-A1-2006/136140
- DE-A1- 4 433 825
- DE-A1-102005 006 912
- DE-A1-102006 051 287
- US-A- 5 908 460

## Beschreibung

Die vorliegende Erfindung betrifft ein Verfahren zum Einstellen einer Referenz-Kupplungsposition in einem Sicherheitsfunktions-Modul einer Kupplungssteuereinrichtung, wobei die Kupplungssteuereinrichtung ein Normalfunktions-Modul aufweist, mittels dessen die Position einer Kupplung im Normalbetrieb unter Verwendung eines Inkremental-Positionsgebers gesteuert wird, wobei das Normalfunktions-Modul die Kupplung nach einem Rücksetzen der Kupplungssteuereinrichtung bis in eine Anschlagposition verfährt und für einen ersten Zeitraum in der Anschlagposition hält, um den Inkremental-Positionsgeber zu referenzieren.

Ein derartiges Verfahren kommt regelmäßig in einer automatisiert betätigbaren Kupplung eines Kraftfahrzeug-Antriebsstranges zur Anwendung, beispielsweise einem Antriebsstrang mit automatisiertem Schaltgetriebe (ASG bzw. AMT) oder mit einem Doppelkupplungsgetriebe.

Die Position der Kupplung wird mittels des Inkremental-Positionsgebers erfasst, um auf dieser Grundlage die Position der Kupplung genau regeln zu können.

Inkremental-Positionsgeber haben jedoch den Nachteil, dass sie nur relativ arbeiten. Dies bedeutet, dass nach einem Rücksetzen einer Kupplungssteuereinrichtung ("Reset") der Inkremental-Positionsgeber neu eingelernt bzw. referenziert werden muss.

Die Kupplung wird automatisiert betätigt, und zwar mittels der Kupplungssteuereinrichtung, die einen Aktuator zum Betätigen der Kupplung ansteuert. Die Kupplung ist dabei in der Regel selbstöffnend oder selbstschließend (im Folgenden wird der Einfachheit halber generell auf "selbstöffnend" abgestellt) ausgebildet, so dass im Falle eines Rücksetzens der Kupplungssteuereinrichtung die Kupplung in Öffnungsrichtung bewegt wird. Da die Kupplungssteuereinrichtung während des Rücksetzens die Signale des Inkremental-Positionsgebers nicht verarbeiten kann, "verliert" der Inkremental-Positionsgeber die absolute Kupplungsposition.

Aufgrund der Tatsache, dass die Kupplung selbstöffnend bzw. selbstschließend ist, kann die aktuelle Position auch nicht einfach vor dem Rücksetzen erfasst und in einem rücksetzfesten Speicher (z.B. einem nicht-initialisierten RAM-Speicher) über die Rücksetzzeitspanne hinweg gehalten werden. Auch nach einem Abstellen des Fahrzeugs und Abschalten der Kupplungssteuereinrichtung ist bei einem Neustart des Kraftfahrzeuges generell davon auszugehen, dass der Inkremental-Positionsgeber die absolute Kupplungsposition nicht mehr "kennt".

Die demzufolge notwendige Referenzierung des Inkremental-Positionsgebers erfolgt generell in Bezug auf eine Anschlagposition bei geöffneter Kupplung. Gegebenenfalls kann zur Sicherheit anschließend auch eine Referenzierung in Bezug auf eine Anschlagposition bei geschlossener Kupplung erfolgen. Der zweite Referenzierungsvorgang stellt dann sicher, dass der zum Betätigen der Kupplung verwendete Aktuator über seinen vollen Verfahrweg betätigt werden kann und nicht irgendwo eine Schwergängigkeit oder dergleichen aufweist. Die zweite Referenzierung wird folglich auch als Verifizierung bezeichnet.

In dem Sicherheitsfunktions-Modul wird die Referenz-Kupplungsposition abgespeichert, bei der es sich bevorzugt um den kleinsten jemals aufgetretenen Wert des Inkremental-Positionsgebers handelt, und zwar egal, ob die Kupplungssteuereinrichtung gerade dabei ist, den Inkremental-Positionsgeber in eine Anschlagposition zu referenzieren oder nicht. Die Referenz-Kupplungsposition wird in dem Sicherheitsfunktions-Modul dazu benötigt, um eine Aussage darüber treffen zu können, welche absolute Position das Normalfunktions-Modul im Betrieb anfährt, und folglich darüber, ob das Normalfunktions-Modul korrekt arbeitet.

Um die Referenz-Kupplungsposition einzustellen, ist es denkbar, dass das Normalfunktions-Modul dem Sicherheitsfunktions-Modul mitteilt, wenn eine Anschlagposition angefahren wird. Demzufolge muss während des Referenzierens eine Kommunikation zwischen dem Normalfunktions-Modul und dem Sicherheitsfunktions-Modul stattfinden. Falls die Mitteilung an das Sicherheitsfunktions-Modul fehlerhaft erfolgt, kann das Sicherheitsfunktions-Modul die korrekte absolute Position nicht ermitteln und damit sicherheitskritische Zustände nicht erkennen.

Demzufolge ist es die Aufgabe der Erfindung, ein verbessertes Verfahren zum Einstellen einer Referenz-Kupplungsposition in einem Sicherheitsfunktions-Modul einer Kupplungssteuereinrichtung anzugeben, wobei insbesondere eine Kommunikation zwischen dem Normalfunktions-Modul und dem Sicherheitsfunktions-Modul nicht notwendig ist.

Diese Aufgabe wird gelöst durch ein Verfahren zum Einstellen einer Referenz-Kupplungsposition in einem Sicherheitsfunktions-Modul einer Kupplungssteuereinrichtung, wobei die Kupplungssteuereinrichtung ein Normalfunktions-Modul aufweist, mittels dessen die Position einer Kupplung im Normalbetrieb unter Verwendung eines Inkremental-Positionsgebers gesteuert wird, wobei das Normalfunktions-Modul die Kupplung nach einem Rücksetzen der Kupplungssteuereinrichtung bis in eine Anschlagposition verfährt und für einen ersten Zeitraum in der Anschlagposition hält, um den Inkremental-Positionsgeber zu referenzieren, und wobei das Sicherheitsfunktions-Modul nach einem Rücksetzen der Kupplungssteuereinrichtung die Referenz-Kupplungsposition auffindet, indem von dem Sicherheitsfunktions-Modul ein aktueller Wert des Inkremental-Positionsgebers daraufhin überwacht wird, ob dieser für einen vorbestimmten zweiten Zeitraum, der kleiner oder gleich dem ersten vorbestimmten Zeitraum ist, im Wesentlichen gleich bleibt.

Durch diese Maßnahme kann das Sicherheitsfunktions-Modul die Referenz-Kupplungsposition "alleine" auffinden, d.h. ohne eine Kommunikation zwischen dem Normalfunktions-Modul und dem Sicherheitsfunktions-Modul. Da nach einem Rücksetzen die Kupplung von dem Normalfunktions-Modul generell sofort in Richtung der Anschlagposition verfahren wird, ändert sich der aktuelle Wert des Inkremental-Positionsgebers ständig, bis die Anschlagposition erreicht wird. Da es zur Referenzierung des Inkremental-Positionsgebers generell notwendig ist, die Kupplung für einen bestimmten Zeitraum (erster Zeitraum) in der Anschlagposition zu halten, kann das Sicherheitsfunktions-Modul die Referenz-Kupplungsposition alleine auffinden, indem ein aktueller Wert des Inkremental-Positionsgebers von dem Sicherheitsfunktions-Modul daraufhin überwacht wird, ob dieser für einen vorbestimmten zweiten Zeitraum, der kleiner oder gleich dem ersten Zeitraum ist, im Wesentlichen gleich bleibt.

Unter einem "im Wesentlichen gleich Bleiben" wird vorliegend verstanden, dass die Überwachung entweder daraufhin erfolgt, dass der Wert tatsächlich für den zweiten Zeitraum gleich bleibt oder innerhalb eines engen Wertebereiches verbleibt (beispielsweise niedrigste aktuelle Position plus eines kleinen Versatzwertes ("Offset")).

Demzufolge wird die Aufgabe vollkommen gelöst.

Generell kann die vorliegende Erfindung sowohl auf solche Referenzierungsverfahren angewendet werden, bei denen die Kupplung in eine Anschlagposition in Offenrichtung verfahren wird (Offen-Referenzposition). Alternativ kann das erfindungsgemäße Verfahren auch auf solche Referenzierungsverfahren angewendet werden, bei denen die Anschlagposition einem Anschlag in Schließrichtung der Kupplung entspricht. Im Folgenden wird generell auf ein Referenzieren in Richtung einer Anschlagposition bei geöffneter Kupplung abgestellt, um die Beschreibung insoweit zu vereinfachen. Es versteht sich jedoch, dass das nachfolgend beschriebene Verfahren in gleicher Weise auch auf solche Verfahren anwendbar ist, bei denen die Referenzierungs-Anschlagposition bei geschlossener Kupplung angefahren wird. Sofern im Folgenden daher von "minimalen" Werten die Rede ist, können damit auch "maximale" Werte gemeint sein, und umgekehrt. In gleicher Weise sind etwaige Vergleiche "kleiner als" dann entsprechend in "größer als" umzudeuten, etc.

Von besonderem Vorzug ist es bei dem erfindungsgemäßen Verfahren, wenn die Referenz-Kupplungsposition des Sicherheitsfunktions-Moduls ein sich im Normalbetrieb jeweils ergebender minimaler Wert des Inkremental-Positionsgebers ist.

Mit anderen Worten wird die Referenz-Kupplungsposition nicht nur während des Referenzierens eingestellt, sondern gegebenenfalls auch im Normalbetrieb, wenn sich die Anschlagposition ändert.

Ferner ist es vorteilhaft, wenn das Sicherheitsfunktions-Modul eine vorläufige Referenzposition abspeichert, die nach einem Rücksetzen der Kupplungssteuereinrichtung auf den aktuellen Wert des Inkremental-Positionsgebers gesetzt wird, wenn der aktuelle Wert kleiner ist als der bisherige Wert der vorläufigen Referenzposition.

Hierdurch kann die vorläufige Referenzposition in dem Sicherheitsfunktions-Modul dazu verwendet werden, um zu überwachen, ob die vorläufige Referenzposition für den vorbestimmten zweiten Zeitraum im Wesentlichen gleich bleibt. Erst wenn dies der Fall ist, kann die vorläufige Referenzposition als Referenz-Kupplungsposition abgespeichert werden.

Dabei ist es von besonderem Vorteil, wenn die vorläufige Referenzposition nach einem Rücksetzen der Kupplungssteuereinrichtung auf einen hohen Initialwert eingestellt wird, der größer ist oder gleich ist als der sich im Normalbetrieb ergebende maximale Wert des Inkremental-Positionsgebers.

Von besonderem Vorzug ist, wenn der Initialwert größer ist als oder gleich ist wie der maximale Wert des Inkremental-Positionsgebers, der sich während des Referenzierens ergibt (und beispielsweise der Anschlagposition in Schließrichtung der Kupplung entspricht).

Hierdurch kann gewährleistet werden, dass die vorläufige Referenzposition nach einem Rücksetzen der Kupplungssteuereinrichtung generell einen Wert hat, der größer ist als der nach dem Rücksetzen von dem Inkremental-Positionsgeber gelieferte Positionswert. Hierdurch kann mit anderen Worten gewährleistet werden, dass die Abfrage, ob der aktuelle Wert des Inkremental-Positionsgebers für den vorbestimmten zweiten Zeitraum im Wesentlichen gleich bleibt, sich auf die Anschlagposition bezieht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug, in dem ein erfindungsgemäßes Verfahren angewendet werden kann;
- Fig. 2: ein Zeitablaufdiagramm zur Darstellung des erfindungsgemäßen Verfahrens gemäß einer Ausführungsform, wobei die Kupplung bei dem Rücksetzen der Kupplungssteuereinrichtung geöffnet ist (beispielsweise bei einem Neustart des Fahrzeugs);
- Fig. 3: ein der Fig. 2 entsprechendes Zeitablaufdiagramm für den Fall eines Rücksetzens bei geschlossener Kupplung; und
- Fig. 4: ein Flussdiagramm zur Darstellung einer Ausführungsform des erfindungsgemäßen Verfahrens.

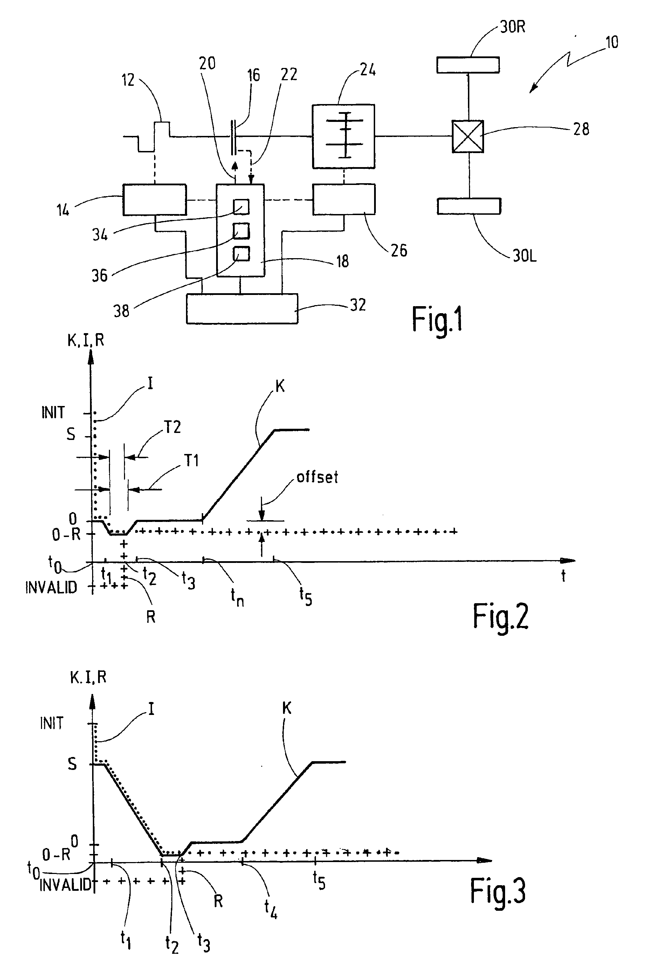

In Fig. 1 ist ein Antriebsstrang für ein Kraftfahrzeug generell mit 10 bezeichnet. Der Antriebsstrang 10 weist einen Antriebsmotor 12 wie einen Verbrennungsmotor auf, der mittels einer Motorsteuereinrichtung 14 gesteuert wird. Ferner beinhaltet der Antriebsstrang 10 eine Kupplungsanordnung 16. Die Kupplungsanordnung 16 kann eine einzelne Kupplung beinhalten, wie beispielsweise bei einem automatischen Schaltgetriebe (ASG, AMT), oder auch zwei Kupplungen im Falle eines Doppelkupplungsgetriebes. Die Kupplungsanordnung 16 wird von einer Kupplungssteuereinrichtung 18 angesteuert, und zwar über einen auf die Kupplungsanordnung 16 wirkenden Kupplungsaktuator 20 und einen Inkremental-Positionsgeber bzw. Inkrementalsensor 22, der einen Parameter der Kupplungsanordnung 16 erfasst, wie beispielsweise den Weg der Kupplung. Im Falle von zwei Kupplungen bei einem Doppelkupplungsgetriebe versteht sich, dass in der Regel auch zwei Kupplungsaktuatoren 20 und zwei Inkrementalsensoren 22 vorgesehen sind.

Ferner beinhaltet der Antriebsstrang 10 ein Stufengetriebe 24, das beispielsweise als Vorgelegegetriebe ausgeführt sein kann. Dabei kann es sich auch beispielsweise um ein Vorgelegegetriebe bestehend aus zwei Teilgetrieben handeln, wie es bei Doppelkupplungsgetrieben üblich ist.

Das Stufengetriebe 24 wird von einer Getriebesteuereinrichtung 26 angesteuert. Ein Ausgang des Stufengetriebes 24 ist mit einem Differential 28 verbunden, das die Antriebskraft auf zwei angetriebene Räder 30L, 30R verteilt.

Der Antriebsstrang 10 weist ferner in der Regel eine übergeordnete Steuereinrichtung 32 auf, die mit der Motorsteuereinrichtung 14, der Kupplungssteuereinrichtung 18 und der Getriebesteuereinrichtung 26 verbunden ist. Alternativ kann auch eine dieser drei Steuereinrichtungen die Funktion einer übergeordneten Steuerung übernehmen. In Fig. 1 ist gestrichelt dargestellt, dass diese Steuereinrichtungen auch untereinander verbunden sein können.

Die Kupplungssteuereinrichtung 18 beinhaltet ein Normalfunktions-Modul 34, mittels dessen die Kupplungsanordnung 16 im Normalbetrieb angesteuert wird.

Wenn beispielsweise von der übergeordneten Steuerung 32 ein Schaltwunsch erteilt wird, wird beispielsweise die Kupplung geöffnet, anschließend ein Gang eingelegt, und in der Folge die Kupplung wieder geschlossen, um einen Gangwechsel durchzuführen. Hierbei ist eine relativ hohe Genauigkeit der Ansteuerung der Kupplungsanordnung 16 notwendig.

Die Kupplungssteuereinrichtung 18 beinhaltet ferner ein Rücksetzfunktions-Modul, das aktiv wird, wenn aufgrund eines Fehlerzustandes die Kupplungssteuereinrichtung 18 zurückgesetzt ("Reset") wird.

Im Falle eines Fehlerzustandes kann von dem Kupplungsaktuator 20 keine Schließkraft mehr auf die Kupplungsanordnung 16 übertragen werden. Die Kupplungsanordnung 16 ist selbstöffnend ausgebildet, so dass sich die Kupplung bei fehlender Ansteuerung durch den Kupplungsaktuator 20 selbsttätig öffnet. Im Falle eines Rücksetzens öffnet sich die Kupplung folglich selbsttätig, und zum Anderen kann während des Rücksetzens das Signal von dem Inkrementalsensor 22 in dem zurückgesetzten Normalfunktions-Modul 34 nicht verarbeitet werden.

Der Inkrementalsensor 22 ist ein relativ arbeitender Sensor, der nicht den Absolutwert einer Kupplungsposition an die Kupplungssteuereinrichtung 18 liefert, sondern nur eine relative Änderung des Weges. Bei einem Rücksetzen "verliert" der Inkrementalsensor 22 folglich seine Kupplungsposition und muss daher nach dem Rücksetzen neu auf die absolute Kupplungsposition referenziert werden. Ferner ist es üblich, den Inkrementalsensor 22 auch bei einem Neustart des Fahrzeugs zunächst auf die absolute Kupplungsposition zu referenzieren, bevor die Kupplung aktiv betätigt wird.

Die Kupplungssteuereinrichtung 18 beinhaltet ferner ein Sicherheitsfunktions-Modul, in dem eine Referenz-Kupplungsposition abgespeichert ist. Die Referenz-Kupplungsposition stellt den im Betrieb jeweils kleinsten aufgetretenen Wert des Inkrementalsensors 22 dar. Diese Referenz-Kupplungsposition wird in dem Sicherheitsfunktions-Modul 38 gespeichert, unabhängig davon, ob gerade ein Rücksetzen der Kupplungssteuereinrichtung stattfindet oder nicht. Die Referenz-Kupplungsposition wird in dem Sicherheitsfunktions-Modul dazu benötigt, um eine Aussage darüber treffen zu können, welche absolute Position das Normalfunktions-Modul im Betrieb anfährt (und damit, ob das Normalfunktions-Modul korrekt arbeitet).

Fig. 2 zeigt ein Zeitablaufdiagramm des erfindungsgemäßen Verfahrens zum Einstellen einer Referenz-Kupplungsposition in dem Sicherheitsfunktions-Modul der Kupplungssteuereinrichtung 18, und zwar bei einem Neustart des Fahrzeugs. Zu dem Zeitpunkt t₀ befindet sich die Kupplung 16 in einer Offenposition O. Der Zeitpunkt t₀ entspricht dem Zeitpunkt eines Rücksetzens der Kupplungssteuereinrichtung 18 bei dem Neustart des Fahrzeugs, das bei t₁ abgeschlossen ist. Hierbei wird eine Referenz-Kupplungsposition R in dem Sicherheitsfunktions-Modul auf einen ungültigen Wert INVALID gesetzt. Ferner wird eine vorläufige Referenzposition I, die als Hilfsgröße zur Berechnung der Referenz-Kupplungsposition R dient, auf einen sehr hohen Wert INIT gesetzt. Nach dem Rücksetzen der Kupplungssteuereinrichtung 18 wird die Kupplung 16 in eine Offen-Referenzposition O-R verfahren, die einer Anschlagposition bei geöffneter Kupplung 16 entspricht. Dies wird benötigt, um den Inkremental-Positionsgeber 22 auf die absolute Kupplungsposition zu referenzieren. Dabei verbleibt die Kupplung 16 für einen ersten Zeitraum T1 in der Offen-Referenzposition O-R. Anschließend wird die Kupplung 16 wieder in die Offenposition O verfahren (zum Zeitpunkt t₃). Zu einem Zeitpunkt t₄ kann die Kupplung 16 dann wieder geschlossen werden, und zwar bis in eine Schließposition S, die bei t₅ erreicht ist.

Das Sicherheitsfunktions-Modul 38 speichert generell die Referenz-Kupplungsposition R als jene Position ab, die dem tiefsten bzw. kleinsten von dem Inkremental-Positionsgeber 22 jemals gemessenen Wert entspricht. Generell ist es denkbar, dass das Normalfunktions-Modul, dann, wenn die Offen-Referenzposition O-R erreicht ist, ein entsprechendes Signal an das Sicherheitsfunktions-Modul 38 sendet und diese Position mitteilt. Dies erfordert jedoch zum einen eine zeitaufwändige Kommunikation zwischen den Modulen und kann zudem zu einem Fehler führen, wenn nämlich das Normalfunktions-Modul 34 die Referenz-Kupplungsposition R nicht hinreichend genau oder korrekt mitteilt.

Demzufolge bestimmt das Sicherheitsfunktions-Modul 38 im vorliegenden Fall die Referenz-Kupplungsposition R, ohne dass eine Kommunikation mit dem Normalfunktions-Modul 34 eingerichtet werden muss. Dies erfolgt, indem nach dem Rücksetzen der Kupplungssteuereinrichtung 18 der aktuelle Wert K des Inkremental-Positionsgebers 22 daraufhin überwacht wird, ob dieser für einen vorbestimmten zweiten Zeitraum T2, der im vorliegenden Fall etwas kleiner ist als der erste Zeitraum T1, im Wesentlichen gleich bleibt. Das Sicherheitsfunktions-Modul 38 weiß, dass ein Rücksetzen der Kupplungssteuereinrichtung 18 durchgeführt wurde, wobei die vorläufige Referenzposition I auf den sehr hohen Wert INT und die gesuchte Referenz-Kupplungsposition R auf einen ungültigen Wert INVALID gesetzt worden sind. Ferner geht das Sicherheitsfunktions-Modul 38 davon aus, dass nach dem Rücksetzen die Referenzierung des Inkremental-Positionsgebers 22 stattfindet, wobei die Kupplung 16 in die Offen-Referenzposition O-R verfahren wird. Das Sicherheitsfunktions-Modul 38 setzt die vorläufige Referenzposition I laufend auf den Wert K des Inkremental-Positionsgebers 22 und beobachtet die zeitliche Entwicklung der vorläufigen Referenzposition I. Zum Zeitpunkt t₂ wird festgestellt, dass die vorläufige Referenzposition I für den vorbestimmten zweiten Zeitraum T2 im Wesentlichen gleich geblieben ist. Zu diesem Zeitpunkt akzeptiert das Sicherheitsfunktions-Modul 38 die vorläufige Referenzposition I als die tatsächliche Referenz-Kupplungsposition R, so dass diese von dem ungültigen Wert auf den Wert der vorläufigen Referenzposition I gesetzt wird. In der Folge bleiben diese Werte jeweils gleich, es sei denn, es tritt wieder ein Rücksetzen oder Ähnliches auf.

Die Referenz-Kupplungsposition R, die von dem Sicherheitsfunktions-Modul 38 auf diese Weise alleine ohne "Zuhilfenahme" des Normalfunktions-Moduls 34 ermittelt worden ist, kann zum Überprüfen verwendet werden, ob das Normalfunktions-Modul 34 korrekt arbeitet.

In Fig. 3 ist eine weitere Ausführungsform des erfindungsgemäßen Einstellverfahrens gezeigt, wobei hier zum Zeitpunkt t₀ von einer Situation im Fahrbetrieb, d.h. bei geschlossener Kupplung 16 (Wert des Inkremental-Positionsgebers K = S), ausgegangen wird.

Der Verfahrensablauf ist jedoch generell wiederum identisch. Die vorläufige Referenzposition I wird auf einen sehr hohen Initialwert INIT, der größer ist als S, eingestellt und "folgt" anschließend dem Wert K des Inkremental-Positionsgebers 22, bis (zwischen t₂ und t₃) die vorläufige Referenzposition I für den vorbestimmten zweiten Zeitraum T2 im Wesentlichen gleich geblieben ist, so dass ab dem Zeitpunkt t₃ die Referenz-Kupplungsposition R gleich der vorläufigen Referenzposition I gesetzt wird.

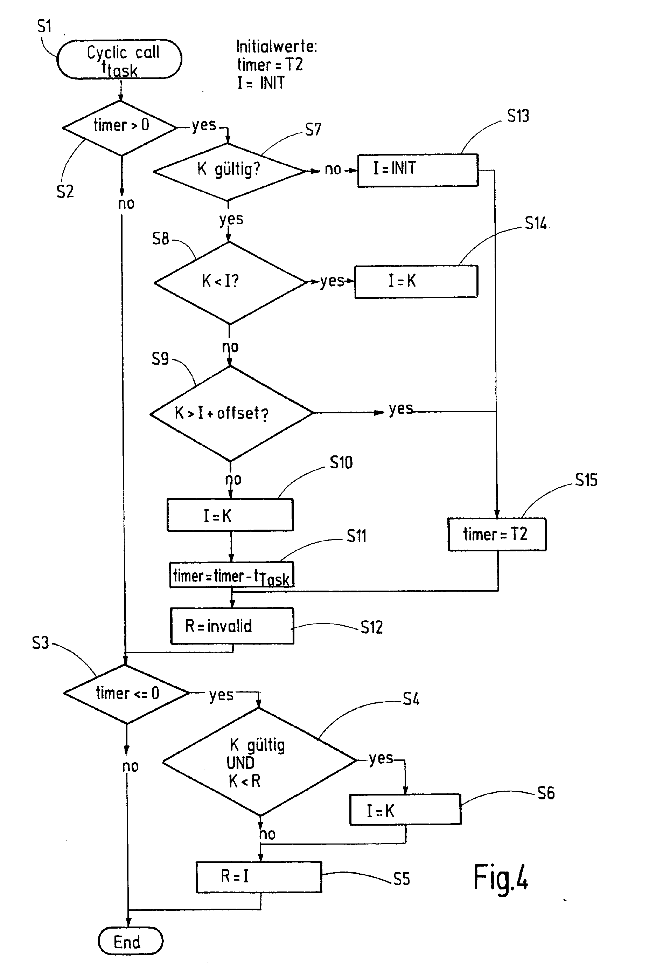

Eine Ausführungsform des erfindungsgemäßen Verfahrens ist ferner in Form eines Flussdiagramms in Fig. 4 dargestellt.

Das Flussdiagramm stellt einen Programmablauf in dem Sicherheitsfunktions-Modul 38 dar. Das Programm startet mit Initialwerten, bei denen ein Zeitgeber auf den zweiten vorbestimmten Zeitraum T2 eingestellt wird (Timer = T2). Ferner wird eine vorläufige Referenzposition I in den hohen Initialwert INIT eingestellt. Anschließend startet das Programm des Sicherheitsfunktions-Moduls 38 im Schritt S1, und zwar durch einen zyklischen Aufruf. Im Schritt S2 wird der Zeitgeber daraufhin abgefragt, ob er größer als 0 ist (Timer >0). Wenn dies nicht der Fall ist, ist die Referenz-Kupplungsposition R bereits eingestellt (wie beispielsweise im laufenden Fahrbetrieb), und das Programm geht über zum Schritt S3. Im Schritt S3 wird abgefragt, ob der Zeitgeber kleiner oder gleich 0 ist. Im normalen Fahrbetrieb ist dies der Fall, so dass im Schritt S4 abgefragt wird, ob die aktuelle Position K gültig ist und ob die aktuelle Position K kleiner ist als die Referenz-Kupplungsposition R. Die aktuelle Position K des Inkremental-Positionsgebers 22 ist gültig, wenn der Inkremental-Positionsgeber 22 beispielsweise keinen Fehler meldet oder kein Fehler des Inkremental-Positionsgebers 22 von einem anderen Funktionsmodul (beispielsweise einer Low Level Software) gemeldet wird. Wenn dies nicht der Fall ist, wenn also beispielsweise die aktuelle Position K nicht kleiner ist als die Referenz-Kupplungsposition R, geht das Programm über zum Schritt S5, bei dem die Referenz-Kupplungsposition R auf die vorläufige Referenzposition I eingestellt wird. Wenn hingegen entweder die aktuelle Position K ungültig ist oder die aktuelle Position K größer oder gleich der Referenz-Kupplungsposition R ist, wird die vorläufige Referenzposition I auf die aktuelle Position K gesetzt (Schritt S6).

In den Schritten S3 bis S5 wird folglich im Normalbetrieb, also dann, wenn die Referenz-Kupplungsposition R bereits eingestellt ist und gleich der vorläufigen Referenzposition I ist, ständig abgefragt, ob der Inkremental-Positionsgeber 22 möglicherweise ein noch kleineres Signal liefert. Dann wird der noch kleinere Wert als die neue Referenz-Kupplungsposition R gesetzt.

Nach einem Rücksetzen der Kupplungssteuereinrichtung 18, wenn das in Fig. 4 dargestellte Programm zum ersten Mal aufgerufen wird, ist der Zeitgeber auf den vorbestimmten zweiten Zeitraum T2 eingestellt, und ist folglich größer O. Demzufolge geht das Programm nach dem Schritt S2 zum Schritt S7 über. Dort wird abgefragt, ob die aktuelle Position K gültig ist. Wenn dies der Fall ist, geht das Programm über zum Schritt S8, in dem abgefragt wird, ob die aktuelle Position K kleiner ist als die vorläufige Referenzposition I. Dies ist beispielsweise dann der Fall, wenn die Kupplung 16 durch das Normalfunktions-Modul 34 in die Offen-Referenzposition O-R verfahren worden ist, so dass der aktuelle Wert K nicht mehr kleiner ist als die vorläufige Referenzposition I (die zuvor auf den vorherigen aktuellen Wert K gesetzt worden ist).

In diesem Fall geht das Verfahren über zum Schritt S9, bei dem abgefragt wird, ob die aktuelle Position K größer ist als die vorläufige Referenzposition I plus einem kleinen Offset-Wert. Diese Abfrage dient dazu, um kleinere Schwankungen um die Offen-Referenzposition O-R herum nach oben (d.h. in Schließrichtung) unberücksichtigt zu lassen. Wenn die aktuelle Position K kleiner als das zwischen der vorläufigen Referenzposition I und dem Offset-Wert (siehe auch Fig. 2) definierte Band ist, geht das Verfahren über zum Schritt S10, bei dem die vorläufige Referenzposition I auf die aktuelle Position K gesetzt wird. Anschließend wird im Schritt S11 der Zeitgeber um die Dauer eines Programmzyklus heruntergezählt. Die Referenz-Kupplungsposition R bleibt im nachfolgenden Schritt S12 jedoch auf dem ungültigen Wert INVALID. Anschließend geht das Verfahren über zum Schritt S3. Da bei der Ermittlung der Referenz-Kupplungsposition R der Zeitgeber folglich noch größer als 0 ist, wird der Programmzyklus beendet und beginnt erneut im Schritt S1. Auf diese Weise wird durch mehrfache Bearbeitung der Schritte S1, S2, S7 bis S12 der Zeitgeber heruntergezählt, sofern die aktuelle Position K im Wesentlichen gleich bleibt. Sobald der Zeitgeber im Schritt S11 schließlich auf 0 heruntergezählt ist, geht das Verfahren nach dem Schritt S3 in den Schritt S4 über. Die aktuelle Position K ist dabei nicht kleiner als die ungültige Position INVALID, auf die die Referenz-Kupplungsposition R noch eingestellt ist, so dass die Referenz-Kupplungsposition R im Schritt S5 auf die vorläufige Referenzposition I gesetzt wird, die zuvor im Schritt S10 auf die aktuelle Position K gesetzt worden ist, die der Anschlagposition bzw. Offen-Referenzposition O-R entspricht.

Anschließend ist die Referenz-Kupplungsposition R gleich der vorläufigen Referenzposition I und gültig zum Überwachen des Normalfunktions-Moduls. In dem folgenden Zyklus des in Fig. 4 gezeigten Programms wird dann wiederum die Abfolge S1, S2, S3, S4 erfolgen, die bereits oben beschrieben wurde.

In Fig. 4 ist ferner gezeigt, dass dann, wenn die aktuelle Position im Schritt S7 nicht gültig ist, die vorläufige Referenzposition I nochmals auf den hohen Initialwert INIT eingestellt wird. Ferner ist in Fig. 4 gezeigt, dass dann, wenn die aktuelle Position im Schritt S8 kleiner ist als die vorläufige Referenzposition I, die vorläufige Referenzposition I auf die aktuelle Position K gesetzt wird (im Schritt S14).

Bei Durchlaufen der Schritte S13 oder S14 geht das Verfahren über zum Schritt S15, bei dem der Zeitgeber erneut auf den vorbestimmten zweiten Zeitraum T2 eingestellt wird.

Solange also die aktuelle Position K ungültig ist oder die aktuelle Position K kleiner ist als die vorläufige Referenzposition I, wird der zweite vorbestimmte Zeitraum T2 nicht heruntergezählt sondern immer wieder im Schritt S15 neu gesetzt. Der Schritt S8 geht zum Schritt S14 folglich während des Zeitraumes über, währenddessen nach dem Ende des Rücksetzens (Zeitpunkt t₁ in den Fig. 2 und 3) die aktuelle Position K ständig kleiner wird, bis schließlich die Offen-Referenzposition O-R erreicht ist.

## Patentansprüche

1. Verfahren zum Einstellen einer Referenz-Kupplungsposition (R) in einem Sicherheitsfunktions-Modul (38) einer Kupplungssteuereinrichtung (18), wobei die Kupplungssteuereinrichtung (18) ein Normalfunktions-Modul (34) aufweist, mittels dessen die Position einer Kupplung (16) im Normalbetrieb unter Verwendung eines Inkremental-Positionsgebers (22) gesteuert wird, wobei das Normalfunktions-Modul (34) die Kupplung (16) nach einem Rücksetzen der Kupplungssteuereinrichtung (18) bis in eine Anschlagposition (O-R) verfährt und für einen ersten Zeitraum (T1) in der Anschlagposition (O-R) hält, um den Inkremental-Positionsgeber (22) zu referenzieren, und wobei das Sicherheitsfunktions-Modul (38) nach einem Rücksetzen der Kupplungssteuereinrichtung (18) die Referenz-Kupplungsposition (R) auffindet, indem von dem Sicherheitsfunktions-Modul (38) ein aktueller Wert (K) des Inkremental-Positionsgebers (22) daraufhin überwacht wird, ob dieser für einen vorbestimmten zweiten Zeitraum (T2), der kleiner oder gleich dem ersten Zeitraum (T1) ist, im Wesentlichen gleich bleibt.

2. Verfahren nach Anspruch 1, wobei die Referenz-Kupplungsposition (R) des Sicherheitsfunktions-Moduls (38) ein sich im Normalbetrieb jeweils ergebender minimaler Wert des Inkremental-Positionsgebers (22) ist.

3. Verfahren nach Anspruch 1 oder 2, wobei das Sicherheitsfunktions-Modul (38) eine vorläufige Referenzposition (I) abspeichert, die nach einem Rücksetzen der Kupplungssteuereinrichtung (18) auf den aktuellen Wert (K) des Inkremental-Positionsgebers (22) gesetzt wird, wenn der aktuelle Wert (K) kleiner ist als der bisherige Wert der vorläufigen Referenzposition (I).

4. Verfahren nach Anspruch 3, wobei die vorläufige Referenzposition (I) nach einem Rücksetzen der Kupplungssteuereinrichtung (18) auf einen hohen Initialwert (INIT) eingestellt wird, der größer oder gleich ist als der sich im Normalbetrieb ergebende maximale Wert (S) des Inkremental-Positionsgebers (22).

## Claims

1. Method for adjusting a reference clutch position (R) in a safety function module (38) of a clutch control device (18), wherein the clutch control device (18) has a normal function module (34) by means of which the position of a clutch (16) is controlled in the normal operating mode by using an incremental position signal transmitter (22), wherein after resetting of the clutch control device (18) the normal function module (34) moves the clutch (16) into a stop position (O-R) and holds it in the stop position (O-R) for a first time period (T1) in order to reference the incremental position signal transmitter (22), and wherein after resetting of the clutch control device (18) the safety function module (38) identifies the reference clutch position (R) in that the safety function module (38) monitors a current value (K) of the incremental position signal transmitter (22) to determine whether said value (K) remains substantially the same for a predetermined second time period (T2) which is shorter than or equal to the first time period (T1).

2. Method according to Claim 1, wherein the reference clutch position (R) of the safety function module (38) is a minimum value of the incremental position signal transmitter (22) which respectively occurs in the normal operating mode.

3. Method according to Claim 1 or 2 wherein the safety function module (38) stores a preliminary reference position (I) which, after resetting of the clutch control device (18) is set to the current value (K) of the incremental position signal transmitter (22) if the current value (K) is lower than the previous value of the preliminary reference position (I).

4. Method according to Claim 3, wherein after resetting of the clutch control device (18) the preliminary reference position (I) is set to a high initial value (INIT) which is higher than or equal to the maximum value (S) of the incremental position signal transmitter (22) which occurs in the normal operating mode.

## Revendications

1. Procédé de réglage d'une position d'embrayage de référence (R) dans un module de fonctionnement de sécurité (38) d'un dispositif de commande d'embrayage (18), le dispositif de commande d'embrayage (18) comportant un module de fonctionnement normal (34) à l'aide duquel la position d'un embrayage (16) est commandée dans une situation de fonctionnement normal en utilisant un capteur de position incrémentiel (22), le module de fonctionnement normal (34) déplaçant l'embrayage (16) après une réinitialisation du dispositif de commande d'embrayage (18) jusque dans une position de butée (O-R) et restant pendant un premier laps de temps (T1) dans la position de butée (O-R), pour référencer le capteur de position incrémentiel (22), et le module de fonctionnement de sécurité (38) trouvant après une réinitialisation du dispositif de commande d'embrayage (18) la position d'embrayage de référence (R) en faisant surveiller par le module de fonctionnement de sécurité (38) une valeur actuelle (K) du capteur de position incrémentiel (22) pour voir si celle-ci reste pour l'essentiel identique pendant un deuxième laps de temps (T2) prédéfini inférieur ou égal au premier laps de temps (T1).

2. Procédé selon la revendication 1, la position d'embrayage de référence (R) du module de fonctionnement de sécurité (38) étant une valeur minimale du capteur de position incrémentiel (22) obtenue respectivement en situation de fonctionnement normal.

3. Procédé selon la revendication 1 ou 2, le module de fonctionnement de sécurité (38) mémorisant une position de référence (I) provisoire réglée après une réinitialisation du dispositif de commande d'embrayage (18) sur la valeur actuelle (K) du capteur de position incrémentiel (22) lorsque la valeur actuelle (K) est inférieure à la valeur provisoire de la position de référence (I) provisoire.

4. Procédé selon la revendication 3, la position de référence (1) provisoire étant réglée après une réinitialisation du dispositif de commande d'embrayage (18) sur une valeur initiale (INIT) élevée supérieure ou égale à la valeur maximale (S) du capteur de position incrémentiel (22) obtenue en situation de fonctionnement normal.
